# EUROPEAN PATENT APPLICATION

(11) **EP 1 061 365 A1**
(43) Date of publication of application: **20.12.2000**
(21) Application number: 00111808.2
(22) Date of filing: 06.06.2000
(51) Int. Cl.: G01N 30/46

(54) **Procedure and device for performing simultaneous gas chromatographic analysis of different components**

(30) Priority: 17.06.1999 IT MI991349
(71) Applicant: ARVI S.n.c., di Arrigoni Roberto e Pavanello Fabrizio, 20081 Abbiategrasso (MI) (IT)
(72) Inventor: Arrigoni, Roberto, 20081 Abbiategrasso (MI) (IT)
(74) Representative: Cioni, Carlo

(57) **Abstract**

Procedure for the gas chromatographic analysis of gaseous mixtures or mixtures that be rendered gaseous in the conditions of the analysis comprising the following stages:
a) simultaneously introduce the sample of the gaseous mixture to be analysed in a first and a second stream of carrier gas that flow through two independent columns (3,3') or system of columns, to separate the components of the mixture by elution, the first column (3) operating in such conditions of gas flow and with a stationary phase suited to the separation of the hydrocarbon, carbon dioxide and carbon monoxide, the second column (3') operating with such static phase and in such conditions of gas flow to separate the other inorganic constituents of the gas mixture;
b) send the carrie gas and the components separated in the first chromatographic column (3) to a first detector (6) and record the signals related to the products eluted;
c) send the carrier gas and the separate components in the second chromatographic column (3') to a second detector (6'M) that detects and records the signals related to the eluted products;
d) compare the signals obtained in the first and in the second detectors with those of the standard reference compounds to identify and determine the components of the gaseous mixture.

## Description

The present invention relates to a procedure and a device for the gas chromatographic analysis of mixtures of different kinds of gases. In particular, the present invention can be used advantageously for the analysis of mixtures of inorganic gases and mixtures of gases containing hydrocarbon. The invention can be used to determine the components of mixtures comprising inorganic and hydrocarbon gases.

It is known that, to analyze mixtures of organic compounds by gas chromatography, the components are separated by elution on suitable columns and are identified and measured by means of suitable detectors.

However, the analysis of mixtures of inorganic gases and hydrocarbons poses considerable problems due, on one hand, to the difficulty of setting up chromatographic columns suitable for the separation of all the components in a short time, and, on the other, to the lack of a high-sensitivity detection system suited to all the components.

Various solutions have been proposed for the analysis of gaseous mixtures containing inorganic and hydrocarbon gases and some of these are in common use.

In particular, techniques involving a series of determinations carried out with different columns (to identify and measure separate components of the mixture each time) have been proposed to resolve the problem of the considerable differences in separation times (retention times) of the components of the gaseous mixtures containing hydrocarbon and inorganic gases. The ASTM 1945 D protocol, related to the gas chromatographic analysis of natural gas, provides for the employment of at least three columns for the determination of the components of the mixture.

The other problem encountered in this type of determination is linked to the need to set up highly sensitive detectors to detect and measure very small concentrations of the components in the gaseous mixtures. The more sensitive detectors, such as flame ionization types, based on the measurement of the electric current generated by the ionization of the combustion products of the eluted substances, can be used only for combustible products or those rendered combustible.

Attempts have been made to resolve this drawback using gas chromatography apparatus that provided two detectors in series: the first generally based on the measurement of the conductivity of the gas and the second on the flame ionization.

Although this solution improves the sensitivity of the measurement of some components, it doesn't furnish a simple method and a device for the simultaneous analysis of inorganic gas and of hydrocarbons mixed with them.

A primary objective of the present invention is a procedure to effect simultaneous and rapid gas chromatographic analysis of both the hydrocarbons and the inorganic gases present in a gaseous mixture.

A second objective of the present invention is a procedure to effect a qualitative and quantitative analysis of low concentrations of hydrocarbon and/or of carbon monoxide and carbon hydroxide in gaseous mixtures also containing other inorganic gases.

A further objective of the present invention is a device that makes the procedures described above possible.

These and other objectives are achieved by the procedure according to the present invention for the gas chromatographic analysis of gaseous mixtures - or mixtures that could be rendered gaseous in the conditions of the analysis - comprising the following stages:
a) simultaneously introduce the sample of the gaseous mixture to be analyzed into a first and a second carrier gas streams that flow through two independent columns or systems of columns, to get the components of the mixture to separate by elution, the first column operating in conditions of gas flow and with a stationary phase suited to the separation of the hydrocarbons, carbon dioxide and carbon monoxide, and the second column operating with such stationary phase and gas flow conditions as will separate the other inorganic gases making up the mixture;
b) send the carrier gas and the components separated in the first chromatographic column to a first detector to detect and record the signals related to the eluted products;
c) send the carrier gas and the separate components in the second chromatographic column to a second detector that detects and records the signals related to the eluted products;
d) compare the signals produced in the first and in the second detection with those of the standard reference compounds to identify and determine the components of the gaseous mixture.

According to a first embodiment of the procedure of the present invention, thermal conductivity detectors are used to detect the components eluted in the first and the second columns.

According to another embodiment of the invention, a flame ionization detector is used to detect the components of the mixture of gases separated in the first column.

According to a further preferred embodiment of the invention, the gases eluted in the first chromatographic column are sent to a hydrogenation reactor (methanation reactor) to transform carbon monoxide and the carbon dioxide into methane and make them detectable by means of a flame ionization detector.

The present invention relates furthermore to a device that uses the aforementioned procedure comprising:
- a sampler comprising a twin-body valve for the simultaneous introduction of two portions of the sample of gaseous mixture to be analyzed into two streams of carrier gas,
- two lines connected in parallel with the twin-body sampler and each comprising a thermostatic gas chromatographic column or system of columns, means for detecting the gases eluted downstream of the columns and means for recording the signals produced by said means of detection
- means for comparing the signals related to the components of the gaseous mixture with those of the standard reference mixtures.

The means for the detection of the signals related to the components eluted could both be thermal conductivity detectors comprising thermistor circuits or filaments or the detector of the hydrocarbon components could be a flame ionization detector and could comprise a methanation reactor upstream of the detector to transform the carbon dioxide and carbon monoxide into methane.

The device according to the invention could advantageously be provided with means of heating the carrier gas, used in the line or lines comprising the thermal conductivity detector before entering the sampler, to bring it to the temperature of the thermostatic column and to pass it through the reference cell at the same temperature as the gas that passes through the measuring cell. Furthermore, systems of compensation can be provided to eliminate disturbances caused by variation in volume due to the introduction of the sample.

The gas chromatography columns of the device according to the invention can be operated at constant temperature or with a programmed increasing temperature.

For simplicity of construction, the columns of the two lines are maintained at the same temperature in the same chamber. It is possible, however, if the requirements of a particular analysis demand it, to operate with columns at different temperatures.

The device according to the invention can be connected to a computerized system that processes the values of the signals obtained and compares them with those of the standard reference compounds.

The procedure and the device according to the present invention are suited in particular to the determination of the components of gaseous mixtures comprising hydrocarbon and inorganic gases, but they could also find application in all cases in which mixtures of compounds that have very different retention times must be analyzed in a simple and rapid way and/or when different means of detection must be used.

The procedure according to the invention could also be applied to devices for the continuous analysis of gaseous mixtures.

The device according to the invention could be equipped with chromatographic columns of a standard type, or capillary columns could be used when high degrees of separation are desired.

The present invention will now be illustrated in more detail and with reference to the enclosed sketches that show an embodiment of the device, together with some examples of employment of the device.
Figure 1 is a block layout that illustrates schematically the principal elements of the device according to the invention and its operation;
Figures 2A, 2B, 3A and 3B are examples of gas chromatograms obtained with the device of Figure 1.

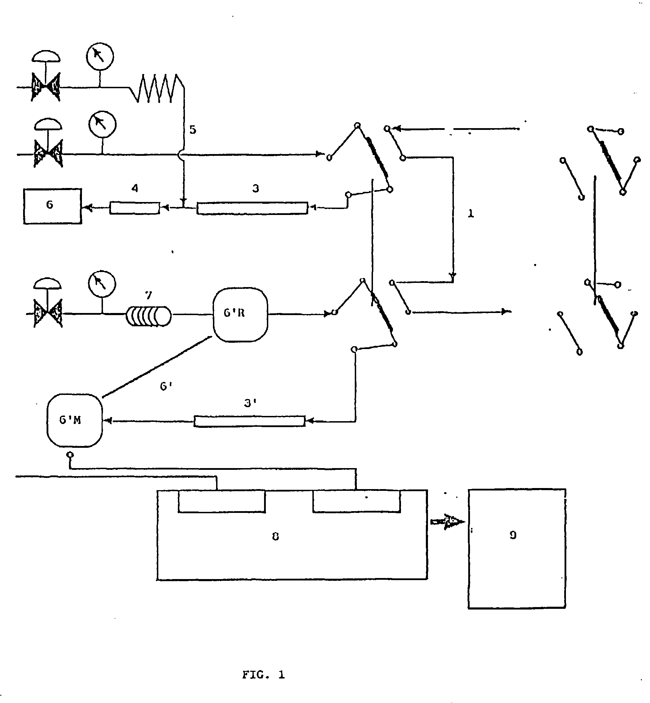

Figure 1 shows the twin-body sampler 1 that communicates with the two lines 2, 2' of carrier gas that supply the two chromatographic columns 3 and 3' respectively.

Downstream of column 3 is arranged the methanation reactor 4 containing a nickel based catalyst and fed with hydrogen through the duct 5. A flame ionization detector 6 immediately follows the methanation reactor 4, while a Wheatstone bridge thermal conductivity gas detector 6' is fitted downstream of the chromatographic column 3'.

The thermal conductivity detector reference resistance 6'R is arranged in a cell through which the carrier gas passes after having been heated by means of the resistance 7 and before receiving the sample in the sampler 1. The carrier gas flows to the measuring cell 6'M taking with it the components of the mixture eluted by means of passage through the column 3.' The integration system 8 compares the signals of the detectors with the standard reference values. The results are displayed by the graphic scanner 9.

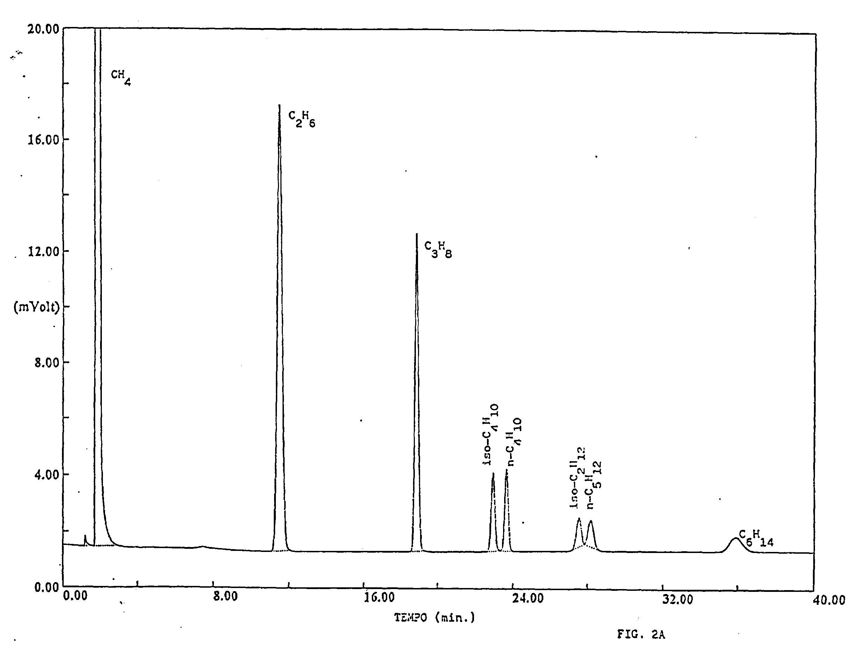

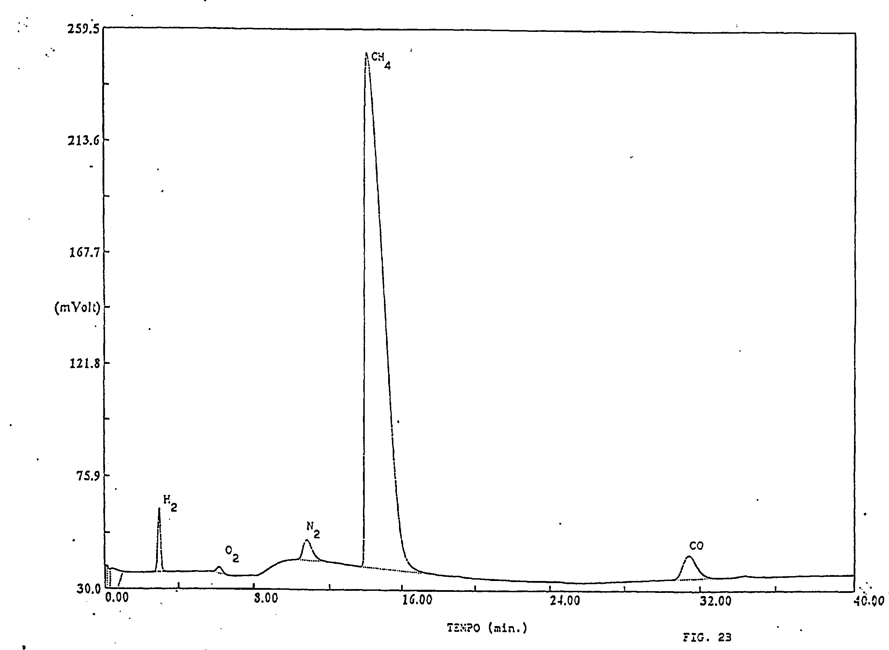

Figures 2A and 2B show in diagram form the result of an analysis on a mixture of gas containing hydrogen, oxygen, nitrogen, carbon monoxide, carbon dioxide, methane, ethane, propane, isobutane, n.butane, isopentane, n.pentane and hexanes deriving from a sample of natural gas. Fig. 2A shows the result of the analysis of the sample effected by means of a flame ionization detector. Methane (CH4) Ethane (C2H6), Propane (C3H8), iso-Butane (i-C4H10), n-Butane (i-C4H10), iso-pentane (i-C5H12), they n-pentane (n-C5H12) and hexanes can be detected as well as carbon monoxide (CO) and carbon dioxide (CO2).

Figure 2B shows the result of the analysis of the same sample related to the portion analyzed by means of conductivity variation. In this chromatogram, hydrogen, oxygen, nitrogen are visible and determinable as well as the methane and the carbon monoxide which are visible and determinable in the chromatogram of Figure 2A. Therefore, all the components of the mixture can be analyzed with excellent resolution in extremely reduced time.

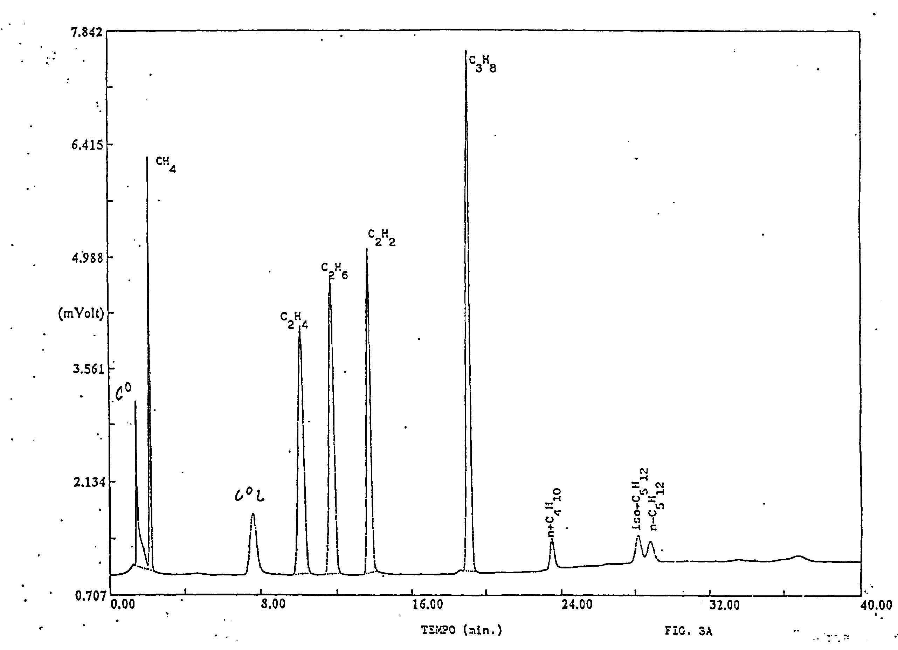

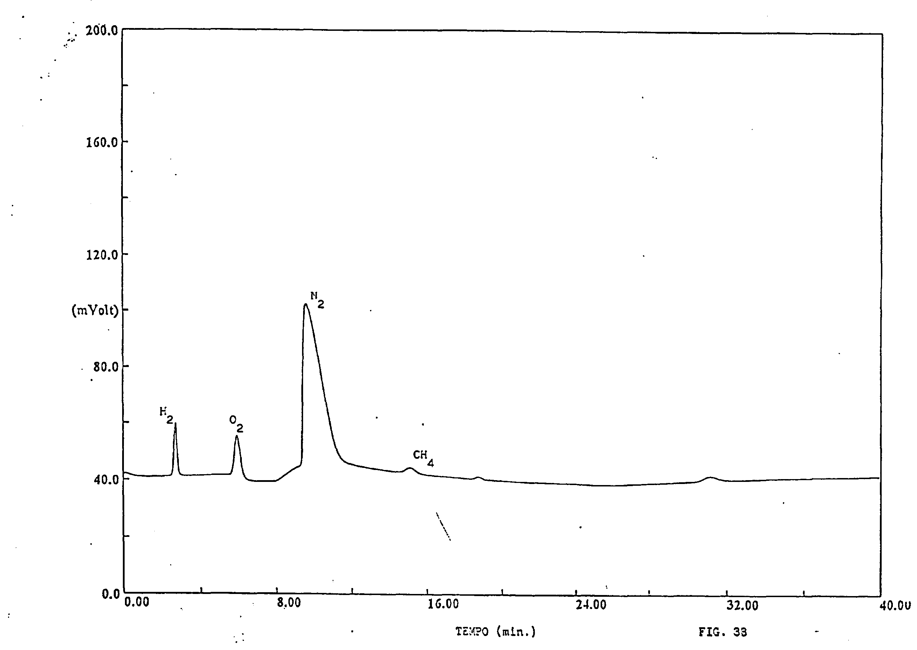

In a similar way, samples of gas dissolved in transformer oil have been analyzed in a short time and with excellent resolution and reliability, as can be seen from Figures 3A and 3B. Chromatogram 3A relates to the sample analyzed by means of flame ionization and chromatogram 3B concerns the same sample analyzed with a conductivity variation detector. The sample contains: hydrogen, oxygen, nitrogen, oxide of carbon, carbon dioxide, methane, ethylene (C2H4), ethane, acetylene (C2H2), propane, n-butane, iso-pentane and n-pentane.

The conditions and the materials used were the following:
Temperature of the chamber: programmed from 50°C to 200°C with increases of 15°C/ minute
Carrier gas in the line A: Argon
Carrier gas in the line B: Argon
Column A: Potopack
Column B: Molecular Sieves
Line A detector: flame ionization detector (F.I.D.)
Line B detector: thermal conductivity filament detector

Both in the case of the samples of natural gas, fig. 2A and 2B, and in that of the gases dissolved in transformer oil, fig. 3A and 3B, the results can be integrated to give a single analysis document showing the complete qualitative and quantitative analysis of the mixture of gases.

## Claims

1. Procedure for the gas chromatographic analysis of gaseous mixtures or mixtures that could be rendered gaseous in the analysis conditions, comprising the following stages:
a) simultaneously introduce the sample of the gaseous mixture to be analyzed into a first and a second stream of carrier gas that flow through two independent columns or systems of columns, to separate the components of the mixture by elution, the first column operating in conditions of gas flow and with a stationary phase suited to the separation of the hydrocarbons, carbon dioxide and carbon monoxide, the second column operating with such stationary phase and in gas flow conditions as to separate out the other inorganic constituents of the gas mixture;
b) send the carrier gas and the components separated in the first chromatographic column to a first detector to detect and record the signals related to the products eluted;
c) send the carrier gas and the components separated in the second chromatographic column to a second detector that detects and records the signals related to the products eluted;
d) compare the signals obtained in the first and in the second detectors with those of the standard reference compounds to identify and determine the components of the gaseous mixture.

2. Procedure for the gas chromatographic analysis of gaseous mixtures or mixtures that could be rendered gaseous in the conditions of the analysis according to Claim 1, characterized by the detectors used to detect the signals of the components eluted in the first and the second column being thermal conductivity detectors.

3. Procedure for the gas chromatographic analysis of gaseous mixtures or mixtures that could be rendered gaseous in the conditions of the analysis according to Claim 1, characterized by the detector of the components of the mixture of gas separated in the first column being a flame ionization detector.

4. Procedure for the gas chromatographic analysis of gaseous mixtures or mixtures that could be rendered gaseous in the conditions of the analysis according to Claim 1, characterized by the gases eluted in the first chromatographic column being made to pass through a hydrogenation reactor (methanation reactor) to transform carbon monoxide and the carbon dioxide into methane and make them detectable by means of the flame ionization detector.

5. Device to perform the gas chromatographic analysis of gaseous mixtures or mixtures that could be rendered gaseous in the conditions of the analysis according to the procedure of Claims from 1 to 4, characterized by comprising:
- a sampler comprising a twin-body valve for the simultaneous introduction of two portions of the sample of gaseous mixture to be analyzed into two streams of carrier gas,
- two lines connected in parallel with the twin-body valve and each comprising a gas chromatography thermostatic column or system of columns, means of detection of the gases eluted downstream of the columns and means for the recording of the signals produced by said systems of detection,
- means for comparing the signals related to the components of the gaseous mixture with those of the standard reference compounds.
